# EUROPEAN PATENT APPLICATION

(11) **EP 1 774 885 A2**
(43) Date of publication of application: **18.04.2007**
(21) Application number: 06398014.8
(22) Date of filing: 20.09.2006
(51) Int. Cl.: A47J 36/00

(54) **Ceramic flameware with interior and exterior non-stick coating**

(30) Priority: 21.09.2005 PT 10335305
(71) Applicant: Faria & Bento, Lda, 2460-771 Alcobaca (PT)
(72) Inventor: Marques Faria, Carlos Alberto, 2460-771 Alcobaca (PT); Constantino, Armando, 2460-771 Alcobaca (PT)
(74) Representative: Pereira da Cruz, Joao

(57) **Abstract**

The present invention consists of allowing a low porosity ceramic object (<8%) (flameware) to be used as cookware, with direct flame and thermal shock performances greater than performances allowed by the ceramic body alone. Cookware, according to the present invention comprises a conventional low porosity ceramic flameware body covered inside and outside with highly elastic coatings. The ceramic body is preferentially cordieritic made from aluminium, silica, magnesium, potassium, manganese, lithium, iron, and titanium oxides. The internal and external coatings can be any conventional material with high elasticity, such as fluorocarbon polymers, with good adherence properties to ceramics, smooth surface, direct flame and severe thermal shock resistance, safe to be used in all modern kitchen equipment (oven, flame, vitroceramic, microwave, freezer, refrigerator and dishwasher), and guaranteeing safety in cooking food for humans in normal conditions of use and the purpose it is made for. The ceramic body consists of sintering objects shaped through slip, plastic or powder manufacturing methods. The coatings are applied on top of the objects, with or without primary coatings. Finally, both the ceramic body and the coatings are sintered.

## Description

### Scope

The present invention relates to the application of highly elastic coatings to objects made of ceramic flameware with low porosity (<8%), to be used in cooking food, methods for its production, and cookware articles made of low porosity ceramic flameware covered with highly elastic coatings.

### Background

Low porosity (<8%) ceramic flameware is ceramic cookware that withstands without cracking:
- Severe temperature changes (> 250°C);
- Direct use on a flame (gas, electric, vitroceramic or glowing charcoal);
- High mechanic shock (> 650 Kg/cm2);

In this description the expression "direct flame" corresponds to direct use on a heating source.

Ceramic is a material that is much more susceptible to failing thermal shock than other materials, namely metals, to a lack of elasticity and a tendency to spread cracks.

Ceramic flameware with high porosity (>10%) allows the use of low expansion glazes, however with much lighter layers than used with conventional ovenware ceramics. Despite having good properties in terms of thermal shock resistance, mechanical resistance and direct flame resistance are much lower than the present invention.

Ceramic ovenware is inappropriate to be used on a direct flame or under severe thermal shock (> 250°C) conditions.

Low porosity flameware, with the consequent impossibility of use as cookware, presents various types of problems related to direct flame and severe thermal shock:
- Glazes or vitreous coatings, as these have to present a smooth and vitreous surface to allow efficient cleaning and hygienic conditions to cook food for human use;
- Having an adequate dilatometric behaviour between the ceramic body and the glaze, implying a very low expansion coefficient of the latter, in order to avoid both the cracking of the glaze or the cracking of the ceramic object;
- A ceramic flameware object without any coating, under conditions of thermal shock greater than 260°C, starts to show small fissures, increasing with the frequency of use under the same conditions until the limit of its useful life, when the length and depth of the fissures crack the object.

The present invention breaks with the practices of the ceramic houseware industry. The premise of utilization of glazes, based on the principle of fusion of different materials, through the fit between glaze and ceramic body within dilatometric intervals, is switched to the premise of junction of different materials through the principle of elasticity of at least one of them.

The premise of junction of materials through fusion makes the use of low porosity flameware as cookware unfeasible because (1) the introduction of glazes reduces significantly the thermal shock and direct flame resistance properties of the set of ceramic body and glaze; (2) unfeasibility of production of glazes of such low expansion coefficients that avoid breaching the glaze or cracking of the objects.

The present invention adopts a new premise of junction of ceramic flameware body with other materials, following the principle of elasticity of the materials to join the ceramic, in order to follow the contraction and expansion of the ceramic, at any point on its surface, under the conditions of direct flame or severe thermal shock.

According to the present invention, any coating made of materials with good elasticity properties, adherence to ceramics, a smooth surface and resistance to direct flame, severe thermal shock, microwaves, dishwashers, freezers, conventional ovens and complying with the safety regulations legally required for cooking human food, can be applied to low porosity ceramic flameware, thus increasing the performance of the set beyond what the ceramic would achieve without any coating.

### Summary of the invention

The present invention provides new utilizations for low porosity (<8%) ceramic flameware, namely in cookware objects to be used on a direct flame or under severe thermal shock conditions, methods for its production, and cookware articles made of low porosity ceramic flameware coated with suitable materials with high elasticity properties.

According to the present invention, the ceramic body is preferably cordieritic made from aluminium oxides, silica, magnesium, potassium, manganese, lithium, iron and titanium. The ceramic pieces are made through slip, plastic or powder shaping methods and fired at maximum temperatures ranging between 1150°C and 1300°C, according to the raw materials used in the composition of the ceramic body and the level of porosity desired between 0% and 8%.

The coating or coatings applied thereto, on either the inside or outside of the previously fired ceramic pieces, can be any material with high elasticity properties, such as for example materials based on fluorocarbon polymers, containing good properties of adherence to ceramics, smoothness of surface, resistance to direct flame and severe thermal shock, being equally usable in all the different kitchen appliances (oven, microwave, freezer, refrigerator, dishwasher), and offering full safety guarantees for human food cooking under normal conditions of use and the purpose it is made for. The type of coating applied inside the ceramic pieces is independent of the coating applied outside, the same or another type being suitable, as long as the abovementioned properties remain the same.

The coatings used inside and outside the ceramic pieces are applied with or without the aid of a primary coating, depending on the level of adherence of the top coat to the ceramic. If there is the aid of a primary coat, it has to have equally high elasticity properties as the top coat. The primary coat is applied with spraying or paintbrush methods. After the primary coat has completely dried, the top coats are applied inside and outside the ceramic piece, covering it completely, with the same methods as the primary coat. After the top coat has dried, the set of ceramic and coating or coatings is sintered under the most adequate conditions for the type of coatings applied, at temperatures that can range from 350°C to 500°C, for a period of time ranging from 15 to 45 minutes.

### Brief description of the drawings

Five drawings are attached hereto in order to make the understanding of the description easier.
Fig. 1 represents the view of a ceramic piece according to the previous technique.
Fig. 2 represents an amplified detail of fig.1
Fig. 3 represents the view of a ceramic piece according to the present invention.
Fig. 4 and fig. 5 represent amplified views of a part of the piece shown in fig. 3, as would be the case according to the previous technique and the present invention respectively.

### Detailed description

The present invention provides new uses for low porosity ceramic flameware (<8%), namely in cookware objects that are used on a direct flame or under severe thermal shock conditions, methods for its production, and cookware articles made of low porosity flameware coated with high elasticity materials.

The new applications for low porosity flameware derive from the applications of high elasticity coatings entirely covering the ceramic flameware pieces.

With a preferred formulation, the ceramic flameware pieces are made using a similar process to the production of fine stoneware, following conventional methods, namely shaping by slip casting, by high pressure casting, by RAM pressing, by roller, or by isostatic pressing. After the shaping operation, the pieces go through a drying and finishing operation commonly used in ceramic production. The sinterization of the ceramic body is made at a temperature of between 1150°C and 1300°C, depending on the level of porosity that is intended to be obtained, varying between 0.1% and 8%. After sinterization, a coating with high elasticity characteristics is applied following the most adequate procedures for the specific type of coating being used.

The ceramic can be prepared using conventional techniques. A cordieritic ceramic body made of aluminium, silica, magnesium, potassium, manganese, lithium, iron, and titanium oxides shall preferably be used. The cordieritic ceramic body has a low expansion coefficient which allows the use of a piece made thereof on a direct flame or under severe thermal shock conditions and with high mechanical resistance. Alternatively, ceramic body formulations with low expansion coefficients could be used, namely silicon carbide based. The disadvantage of this example of alternative formulation consists of the much higher costs involved in relation to the preferred formulation, in terms of raw material and energy costs.

The formulation of the ceramic body is not critical *per se*. Moreover, any formulation known by those skilled in the art can be used.

The percentages of the weights of the elements included in the ceramic body can vary significantly, depending on the region of the source of the raw materials containing the desired minerals, and also with regard to the specific shaping techniques (slip casting, roller, RAM, high pressure casting or isostatic pressing).

For example, ceramic bodies having the following percentage ranges with regard to the weights of the component elements can be used:
- Aluminium oxide: 35% - 40%;
- Silicon oxide: 40% - 50%;
- Lithium oxide: 01% - 05%;
- Magnesium oxide: 02% - 10%;
- Calcium oxide: 00% - 01%;
- Potassium oxide: 00% - 02%;
- Sodium oxide: 00% - 02%;
- Iron Oxide: 00% - 01%;
- Titanium oxide: 00% - 01%.

The manufacturing process for the ceramic pieces is not critical *per se*, as is widely known in the art, comprising the operations of shaping, finishing, drying, and sinterization, such as to any product of fine stoneware or porcelain.

The shaping operation can be made by:
- Conventional slip casting or high pressure casting, whereas for each of the cases a preferred slip formulation is necessary with density in the range of 1650 and 1780 grams per litre (gr./l), viscosity and thixotropy in the ranges of 250°-330° and 30°-120° respectively, both measured in a Gallenkamp viscosimeter;
- Plasticized shaping either with roller or RAM pressing, where the ceramic body shall preferably have the following characteristics: mechanical resistance between 30 and 90 kilogram force per square centimetre (Kgf/cm2); linear retraction green-dry between 3% and 6%; and hardness ranging between 0.5 and 1.5 Kgf/cm2;
- The shaping operation in dry form (isostatic press) can be made based on a ceramic body perfectly identical to the plasticized form, previously atomized, and presenting a grain size distribution ranging from 10 to 500 µm, following a Gauss distribution, and a maximum humidity of 7%.

The drying operation is intended to reduce humidity to below the 1% threshold, to further start the sinterization process using oxidation or a reduction furnace atmosphere.

The sinterization process is not critical *per se*. It can be carried out in still kilns with a slow curve, or in tunnel kilns with a faster curve. The maximum temperatures shall preferably be between 1150°C and 1300°C, depending on the desired levels of mechanical resistance, porosity and target cost. The higher the temperature, the higher the mechanical resistance, but also the higher the energy costs.

After sinterization of the ceramic pieces comes the coating operation. The inside and outside coating is applied with or without the aid of a primary coat and the top coat. Between the primary coat and the top coat an intermediate coat can be applied in order to increase adherence to the ceramic. Each of the materials applied on the ceramic shall have high elasticity and resistance to high temperatures.

The composition of the polymer coatings made of resins resistant to high temperatures is not critical *per se,* within the scope of the present invention.

The primary, intermediate and top coatings must have good properties of adherence to ceramics, smoothness of surface, resistance to direct flame and severe thermal shock, being equally usable in all the different kitchen appliances (oven, microwave, freezer, refrigerator, dishwasher), and offering full safety guarantees for human food cooking under normal conditions of use and the purpose it is made for. The materials to apply, according to the present invention, can be for example polymers with high resistance to very high temperatures, as is the case of fluorocarbon based polymers, such as polytetrafluoroethylene (PTFE), polymers of chlorotrifluoroethylene (CTFE), fluorinated ethylene-propylene polymers (FEP), polyvinylidene fluoride (PVF), combinations thereof and the like. The fluorocarbon polymer top coat has to contain adhesion promoting high temperature binder resins, such as polyamideimide resins (PAI), polyethersulfone resins (PES) and polyphenylene sulfide resins (PPS).

The application of the primary coat is made through spraying or paintbrush techniques, in order to cover uniformly and completely the ceramic piece, with a layer having a thickness when dry of 5 to 10 µm. After the application of the primary coat, a complete drayage operation takes place at a temperature not exceeding 80°C. According to the present invention it absolutely critical that the ceramic pieces are completely and homogeneously covered, both on the inside and on the outside, otherwise the performance of the ceramic flameware with a coating will not be superior to the ceramic flameware piece without any coating.

After drying the primary coat, the top coat is applied using the same techniques as for the primary coat. The top coat can be different on the inside and the outside of the pieces, namely in respect of the composition of the high temperature binder resins. The application of the top coat, as with the primary coat, has to cover completely and homogeneously the ceramic piece, inside and outside, with a layer with a thickness of between 12 and 25 µm. Afterwards, the pieces with the top coat are sintered at temperatures of between 350°C and 475°C for 4 to 8 minutes.

The present invention provides levels of performance that are much higher than those of ceramic flameware pieces per se and those of conventional high porosity ceramic flameware (+/-10%).

In comparative tests, using 5 pieces according to the present invention, 5 pieces made of low porosity ceramic flameware without any coating, and 5 pieces of partially glazed high porosity ceramic flameware, the following results were obtained:
- On a direct flame, a conventional test of putting water on the inside of the piece occupying a volume of % of the capacity, on a gas flame (more intense than an electric flame) letting the water boil during 30 minutes, and finally cooling until the water reaches room temperature. Each operation is called a cycle. Internationally, it is stipulated that a ceramic product is safe to be used on a flame if it withstands at least 6 of the abovementioned cycles without breaking completely. The direct flame performance is measured by the number of cycles that the product withstands until it breaks completely. The comparative results were for a maximum of 11 cycles for the partially glazed high porosity ceramic flameware piece, a maximum of 18 cycles for the low porosity ceramic flameware piece without any coating, and a minimum of 60 cycles for the pieces according to the present invention, because 60 was the number of cycles tested.

In terms of thermal shock, tests were run according to the ASTM method, the most stringent known in the art, with 3 pieces according to the present invention, 3 pieces made of low porosity ceramic flameware without any coating, and 3 pieces of partially glazed high porosity ceramic flameware. The following results were obtained for tests starting at 121°C and finishing at 405°C:
- The pieces made with low porosity ceramic flameware without any coating started to show fissures by the first cycle at 275°C, without ever breaking completely. The partially glazed high porosity conventional ceramic flameware started to show fissures by the first cycle at 275°C, never breaking completely. The pieces made according to the present invention started to show fissures at the first cycle at 345°C, never breaking completely.

In relation to the state of the art, the present invention provides improvements of performance in thermal shock resistance of 70°C (approximately 30%) and an improvement of performance in a direct flame of at least 42 cycles (at least 3.3 times).

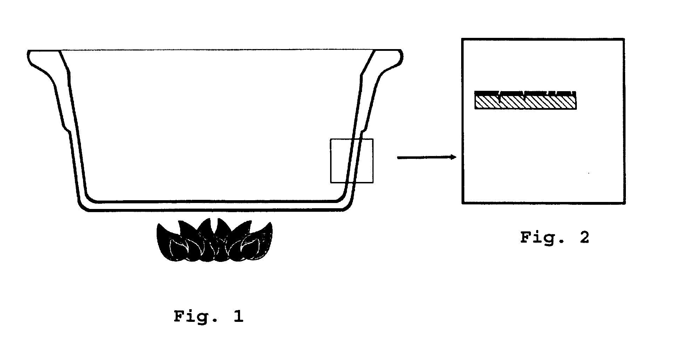

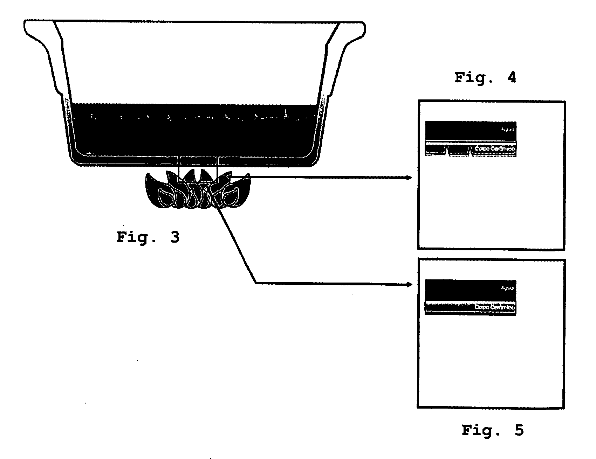

As can be observed from the attached drawings, the ceramic piece of the previous technique, when subject to a direct flame, cracks due to the lack of fit between the dilatometric coefficients of the ceramic body and the outside glaze (fig. 1 and fig. 2). In fig. 3, fig. 4 and fig. 5 we can observe cracking due to pressure created between the materials of the ceramic body and the glazes (inside and outside), as a result of the different dilatometric behaviour (fig. 3 and fig. 4), and the behaviour of the materials of the ceramic piece according to the present invention (fig. 3 and fig. 5), where the high elasticity coatings follow at every point on the surface exactly the expansion and contraction of the ceramic, thus avoiding the appearance of pressure and therefore of cracks.

## Claims

1. Ceramic for a direct flame, coated inside and outside with high elasticity coatings, wherein? the low porosity ceramic body is cordieritic and shaped by conventional slip casting, high pressure casting, RAM pressing, roller, or isostatic pressing, **characterized by** applying to the inside and outside of the ceramic body a high elasticity coating in order to allow expansion and contraction of the ceramic, under the effect of a direct flame or severe thermal shock, immediately followed by the materials joined with the ceramic?, at any point on its surface, thus being able to withstand a thermal shock greater than 250°C, a direct flame from a heating source and mechanical strength greater than 650 Kg/cm².

2. Ceramic for a direct flame, according to the previous claim, **characterized in that** the applied coating, both inside and outside previously sintered ceramic pieces, is any conventional material of high elasticity, for example materials based on fluorocarbon, having properties of good adherence to the ceramic, smoothness of surface, resistance to direct flame and resistance to severe thermal shock.

3. Ceramic for a direct flame, according to the previous claims, **characterized by** fluorocarbon based polymers being chosen from the group of polytetrafluoroethylene (PTFE), polymers of chlorotrifluoroethylene (CTFE), fluorinated ethylene-propylene polymers (FEP), polyvinylidene fluoride (PVF), combinations thereof and the like.

4. Ceramic for a direct flame, according to the previous claims, **characterized in that** the said polymers contain adhesion promoting high temperature binder resins, such as polyamideimide resins (PAI), polyethersulfone resins (PES) and polyphenylene sulfide resins (PPS).

5. Ceramic for a direct flame, according to the previous claims, **characterized in that** the type of coating to be applied inside the ceramic pieces is independent of the type of coating applied outside the said pieces, being either the same material or another, as long as the properties described in claim 1 are maintained.

6. Ceramic for a direct flame, according to the previous claims, **characterized in that** the type of coating to be applied inside and outside the ceramic pieces, with or without the aid of a primary coat, depends on the adherence to the ceramic.

7. Ceramic for a direct flame, according to the previous claims, **characterized in that** if a primary coat is used, it shall have equally high elasticity properties and be applied through spraying or paintbrush techniques.

8. Ceramic for a direct flame, according to the previous claims, **characterized in that** the inside and outside coatings are applied, after drying the primary coat if used, through spraying or paintbrush techniques completely covering? the ceramic piece, and wherein? the set ceramic/coating is further dried and sintered, under the most adequate conditions for the type of coating or coatings being used, at temperatures ranging from 350°C to 500°C for a period of time between 15 and 45 minutes.

9. Ceramic for a direct flame, according to the previous claims, **characterized in that** the application of the coating, as in the case of the primary coat if used, has to uniformly and completely cover the ceramic piece, both inside and outside, with a layer having a thickness of between 12 and 25 µm.

10. Ceramic for a direct flame, according to the previous claim, **characterized in that** it is suitable for use in the various pieces of kitchen equipment, such as ovens, microwaves, freezers, refrigerators, flames from a heating source, and dishwashers, also offering all the safety guarantees for cooking food under the normal conditions of use and the purpose it is made for.
